# EUROPÄISCHE PATENTSCHRIFT

(11) **EP 0 942 503 B1**
(45) Veröffentlichungstag und Bekanntmachung des Hinweises auf die Patenterteilung: **16.10.2002**
(21) Anmeldenummer: 99104288.8
(22) Anmeldetag: 03.03.1999
(51) Int. Cl.: H02B 1/28

(54) **Feldgerät der Zündschutzart der druckfesten Kapselung**
Spark-proof and pressure-resistant apparatus for working site
Appareil de chantier anti-étincelles et antidéflagrant

(30) Priorität: 10.03.1998 DE 19810350
(43) Veröffentlichungstag der Anmeldung: 15.09.1999
(73) Patentinhaber: SAMSON AKTIENGESELLSCHAFT, 60314 Frankfurt (DE)
(72) Erfinder: Hoffmann, Heinfried Dr.-Ing., 60388 Frankfurt/Main (DE); Kemmler, Lothar, 64546 Mörfelden-Walldorf (DE)
(74) Vertreter: Goddar, Heinz J., Dr.

(56) Entgegenhaltungen:
- DE-A- 3 012 743
- DE-U- 29 517 005
- US-A- 3 210 608

## Beschreibung

Die gegenwärtige Erfindung betrifft ein elektrisches Feldgerät der Zündschutzart der druckfesten Kapselung zum Einsatz in explosionsgefährdeten Bereichen.

Viele Feldgeräte werden in explosionsgefährdeten Bereichen eingesetzt, in denen beispielsweise brennbare Flüssigkeiten oder Gase gelagert, transportiert und/oder verarbeitet werden, so daß die Gefahr einer explosionsfähigen Atmosphäre besteht. Besondere Schutzmaßnahmen sind deswegen erforderlich, um eine mögliche Explosion zu vermeiden. Bei der Installation von Feldgeräten in solchen explosionsgefährdeten Bereichen werden dabei im wesentlichen zwei grundsätzlich unterschiedliche Konzepte angewendet, die sowohl unterschiedliche Feldgeräte .sowie elektrische Signale als auch eine unterschiedliche Installation der Leitungen erfordern.

In Europa werden überwiegend Feldgeräte gemäß einem ersten Konzept, nämlich der eigensicheren Zündschutzart "EEx i", verwendet. Das bedeutet, daß durch Maßnahmen wie beispielsweise Vergießen von elektronischen Bauteilen oder Schutzschaltungen aus typischerweise Dioden und Widerständen sichergestellt wird, daß auch im Schadensfall keine Energie lokal auftreten kann, die eine Explosion auslösen könnte. Die auf den Signalleitungen transportierte Energie ist deswegen ebenfalls begrenzt. Die Trennung der Stromkreise in einen sicheren Bereich und einen' explosionsgefährdeten Bereich wird mittels Sicherheitsbarrieren oder Speisetrennern realisiert, die im sicheren Bereich angeordnet sind.

Weiterhin üblich ist der Einsatz von Feldgeräten gemäß einem zweiten Konzept, nämlich der Zündschutzart der druckfesten Kapselung "EEx d", die vor allem in den USA, in Arabien und auch in Italien weit verbreitet sind. Ein eigensicheres Feldgerät ist dabei durch konstruktive Maßnahmen im wesentlichen des Gehäuses so gestaltet, daß auch ein Funke beziehungsweise eine Flamme innerhalb des Gehäuses nicht in der Lage wäre, außerhalb des Gehäuses einen Schaden auszulösen. Feldgeräte dieser zweiten Zündschutzart weisen deswegen meist massive Gehäuse, deren Fügestellen durch Schraubgewinde oder lange enge Spalte gekennzeichnet sind, und Anzeigen, die durch entsprechend dicke Fenster, beispielsweise aus Panzerglas, geschützt werden, auf Gehäuse für die Schutzart der druckfesten Kapselung "EEx d" sind somit im allgemeinen schwer sowie teuer und dürfen im Betriebsfall nicht geöffnet werden. Die Installation von Leitungen im explosionsgefährdeten Bereich ist dabei oftmals in Rohrleitungssystemen vorgesehen, wobei die Rohre dann mit den Feldgeräten verschraubt werden. Eine generelle Begrenzung der Energie auf den Leitungen oder eine Trennung der Stromkreise in einen sicheren und einen explosionsgefährdeten Bereich ist allerdings nicht erforderlich.

Die Kombination zweier Gehäuse der Schutzart der druckfesten Kapselung ist beispielsweise aus der US 3,210,608 bekannt. Diese Druckschrift offenbart eine explosionssichere Schalttafel, die ein Anschlußgehäuse und ein Gehäuse für Schutzschalter bzw. elektrische Unterbrecher umfaßt. Zwischen den beiden Gehäusen befindet sich eine abgedichtete Verbindungsinstallation. Diese Installation ist so ausgeführt, daß das Gehäuse, das die Schutzschalter beinhaltet, relativ zum Anschlußgehäuse verschwenkbar ist, so daß einerseits eine Bedienung der Schutzschalter über auf der einen Außenseite des Gehäuses angeordnete Hebel und andererseits ein Austausch der Schutzschalter durch auf der anderen Außenseite des Gehäuses angeordnete Öffnungen, die im Betrieb durch Deckel geschlossen sind, möglich ist.

Es ist im allgemeinen nicht erwünscht, innerhalb eines explosionsgefährdeten Bereiches einer verfahrenstechnischen Anlage Feldgeräte gemäß den beiden oben beschriebenen Konzepten, nämlich Feldgeräte der eigensicheren Zündschutzart einerseits und Feldgeräte der Zündschutzart der druckfesten Kapselung andererseits, einzusetzen, da diese beiden unterschîedlichen Feldgeräte insbesondere eine unterschiedliche Installation der Leitungen, Schaltschränke beziehungsweise Anschlußgehäuse erfordern und Bedienpersonen üblicherweise nur mit einer Installationsart Erfahrungen besitzen. Für Hersteller von Feldgeräten ergibt sich daraus die schwierige Situation, daß im wesentlichen zwei in Elektronik und Gehäuse völlig unterschiedliche Feldgerätetypen, nämlich einer pro Zündschutzart, zu entwikeln und zu fertigen sind. Nachteiligerweise werden dabei bei der Konstruktion von Feldgeräten der Schutzart der druckfesten Kapselung "EEx d" vielfältige bedienerfreundliche Eigenschaften mit Möglichkeiten der Parametrierung und Kontrolle - wie sie von eigensicheren Feldgeräten bekannt sind - oftmals nicht realisiert, da innerhalb des Gehäuses liegende Bedien- und Justageeinrichtungen im Regelfall nicht zugänglich sind.

Ferner sind Gehäuse zum Erfüllen der Explosionsschutzanforderungen "EEx d", also der Zündschutzart der druckfesten Kapselung "EEx d", zum Einbau handelsüblicher Steuerungen oder Elektrogeräte, wie beispielsweise Schalter, selbst mit der Möglichkeit zum Anflanschen bekannt.

Aufgabe der vorliegenden Erfindung ist es daher, das gattungsgemäße Feldgerät der Zündschutzart der druckfesten Kapselung derart weiterzuentwickeln, daß es die Nachteile des Standes der Technik überwindet, daß heißt insbesondere auch Eigenschaften eines eigensicheren Feldgerätes aufweist und ein Teil des Feldgerätes auch im explosionsgefährdeten Bereich zu Einstell- und Wartungszweken geöffnet werden kann.

Diese Aufgabe wird erfindungsgemäß dadurch gelöst, daß das Feldgerät aus mindestens zwei mechanisch sowie elektrisch gekoppelten Modulen besteht, wobei ein erstes Modul einen Anschlußraum zum Anschluß des Feldgerätes in einem explosionsgefährdeten Bereich mit darin angeordneter Sicherheitsbarriere und ein Gehäuse der Zündschutzart der druckfesten Kapselung aufweist, das zweite Modul ein Feldgerät der eigensicheren Zündschutzart aufweist, die elektrische Verbindung zwischen den beiden Modulen eine zünddurchschlagsichere Aderleitungsdurchführung umfaßt, und die elektrischen Signalverbindungen des zweiten Moduls über die Aderleitungsdurchführung realisiert sind.

Dabei kann vorgesehen sein, daß die mechanische Verbindung beider Module aus einer Schraubverbindung besteht, die vorzugsweise eine Verdrehsicherung umfaßt.

Erfindungsgemäß wird dabei vorgeschlagen, daß die Aderleitungsdurchführung und die Schraubverbindung in einem ausgebildet sind.

Ferner kann gemäß der Erfindung vorgesehen sein, daß die Schraubverbindung als ein Rohr mit einem Außengewinde realisiert ist, und durch das Rohr Aderleitungen geführt sind.

Die Aderleitungsdurchführung kann drei Adern, vorzugsweise drei bis sieben Adern, gemäß der Erfindung aufweisen.

Eine Ausführungsform der Erfindung ist gekennzeichnet durch ein Verbindungskabel zum Verbinden des Feldgerätes mit einer Leitwarte in einem sicheren Bereich, und eine erste Anschlußeinheit im ersten Modul zum Anschließen des Verbindungskabels.

Dabei kann erfindungsgemäß vorgesehen sein, daß die erste Anschlußeinheit und die Sicherheitsbarriere innerhalb des ersten Moduls vergossen sind.

Weiterhin wird erfindungsgemäß vorgeschlagen, daß in dem zweiten Modul eine zweite Anschlußeinheit angeordnet ist, und die zweite Anschlußeinheit einer Elektronik und Bedieneinheit verbunden ist.

Das zweite Modul kann erfindungsgemäß einen Stellungsregler darstellen.

Eine Weiterentwicklung der Erfindung ist dadurch gekennzeichnet, daß das zweite Modul mindestens einen Grenzsignalgeber der eigensicheren Zündschutzart enthält, und jeder Grenzsig- nalgeber über zwei Adern der Aderleitungsdurchführung angeschlossen ist.

Ferner wird mit der Erfindung vorgeschlagen, daß das Feldgerät zur bidirektionalen Kommunikation über die elektrischen Anschlüsse im Anschlußraum des ersten Moduls ausgelegt ist.

Erfindungsgemäß kann vorgesehen sein, daß die Kommunikation mit dem Feldgerät durch ein einem analogen Signal überlagerbares, mittelwertfreies, digitales Signal erfolt, insbesondere gemäß dem HART-Feld-Kommunikationsprotokoll.

Schließlich kann erfindungsgemäß auch vorgesehen sein, daß das Feldgerät als digitales Prozeßgerät ausgelegt ist, und die Kommunikation über einen digitalen Feldbus erfolgt.

Der Erfindung liegt somit die überraschende Erkenntnis zugrunde, daß die Vorteile eines Feldgeräts der Zündschutzart der druckfesten Kapselung mit denen eines Feldgeräts der eigensicheren Zündschutzart verbunden werden können, indem das Feldgerät aus zwei mechanisch sowie elektrisch gekoppelten Modulen besteht, von denen das eine Modul ein Gehäuse der Zündschutzart der druckfesten Kapselung und das andere Modul ein Feldgerät der eigensicheren Zündschutzart aufweist.

Das erfindungsgemäße Feldgerät zum Einsatz in explosionsgefährdeten Bereichen gemäß der Zündschutzart der druckfesten Kapselung ermöglicht somit, daß ein Teil des Feldgerätes auch im explosionsgefährdeten Bereich zu Einstellund Wartungszweken geöffnet werden kannt, nämlich der als zweites Modul der eigensicheren Zündschutzart realisierte Teil, so daß das gesamte "EEx d" Feldgerät vorteilhafterweise weitgehend einem eigensicheren Feldgerät gleicht.

Mit einer entsprechend gestalteten Sicherheitsbarriere ist das erfindungsgemäße "EEx d" Feldgerät ferner in gleicher Weise für eine bidirektionale Kommunikation wie das ihm zugeordnete eigensichere Feldgerät geeignet. Dabei kann die Kommunikation sowohl über eine digitalen Feldbus als auch durch ein dem analogen Signal überlagertes mittelwertfreies digitales Signal, wie beispielsweise nach dem HART-Feld-Kommunikations-Protokoll (HART= Highway Addressable Remote Transducer) erfolgen.

Außerdem wird trotz der Aufteilung des erfindungsgemäßen Feldgerätes in zwei Gehäuse, nämlich zwei Module ein "EEx d" Feldgerät geliefert, das relativ klein und leicht ist, da nur das erste Modul ein druckgekapseltes Gehäuse benötigt.

Die Kombination der Eigenschaften eines Feldgerätes der Zündschutzart der druckfesten Kapselung mit denen eines Feldgerätes der eigensicheren Zündschutzart bedeutet'für den Hersteller, insbesondere im Falle kleinerer Serien, einen wirtschaftlichen Vorteil, da Entwicklungs- und Werkzeugkosten reduziert und gleichzeitig Lagerhaltung und Vertrieb deutlich vereinfacht werden. Aber auch der Anwender profitiert von dem erfindungsgemäßen "EEx d" Feldgerät, das aufgrund seines geringen Gewichts und der Möglichkeit des Gehäuseöffnens besonders einfach zu handhaben, insbesondere zu installieren, ist.

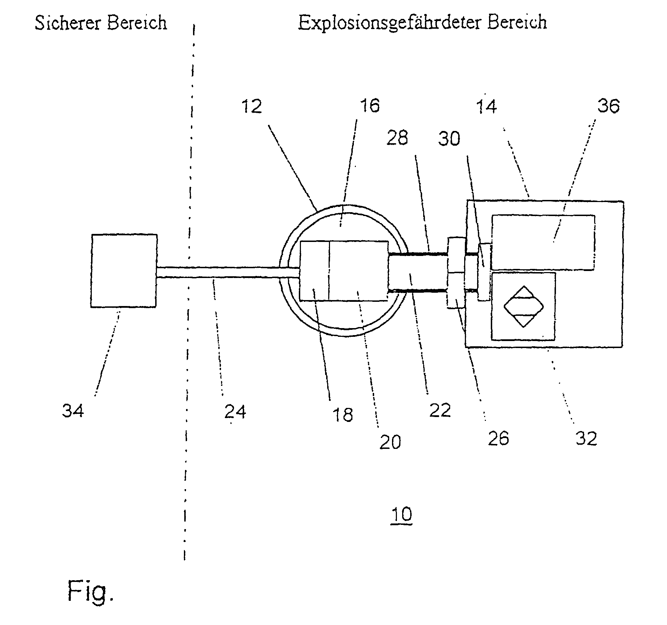

Weitere Merkmale und Vorteile der Erfindung ergeben sich aus der nachfolgenden Beschreibung, in der ein erfindungsgemäßes Ausführungsbeispiel anhand einer schematischen Zeichnung im einzelnen erläutert ist. Dabei zeigt die aus einer einzigen Figur bestehenden Zeichnung ein Schnittbild eines erfindungsgemäßen Feldgerätes.

Das in der Figur gezeigte Feldgerät 10 besteht aus zwei gekoppelten Modulen 12, 14, wobei das erste Modul 12 einen Anschlußraum 16 zum Anschluß des Feldgerätes 10 in einem explosionsgefährdeten Bereich mit darin angeordneter Sicherheitsbarriere 20 und ein Gehäuse der Zündschutzart der druckfesten Kapselung aufweist. Das Feldgerät 10 ist ferner durch ein Verbindungskabel 24 mit einer Leitwarte 34 in einem sicheren Bereich verbunden. Für den Anschluß dieses Verbindungskabels 24 ist eine erste Anschlußeinheit 18 im ersten Modul 12 vorgesehen, die typischerweise aus einem Klemmenblock besteht und zusammen mit der Sicherheitsbarriere 20 innerhalb des ersten Moduls 12 vergossen ist. Das Verbindungskabel 24 ist durch eine übliche "EEx d" Verschraubung oder über die Installation in einem verschraubten Rohrleitungssystem in das erste Modul 12 eingeführt. Die Kopplung beider Module 12, 14 ist elektrischer sowie mechanischer Art und über eine zünddurchschlagsichere Aderleitungsdurchführung 22 realisiert, die beispielsweise aus einem Rohr mit Außengewinde 28 und innerhalb des Rohres vergossenen Adern besteht, wobei das zweite Modul 14 mittels einer Verdrehsicherung 26 gegen ein Verdrehen relativ zu dem ersten Modul 12 geschützt ist. Das zweite Modul 14 stellt ein eigensicheres Feldgerät dar, in dem eine zweite Anschlußeinheit 30 angeordnet ist, die mit einer Elektronik und Bedieneinheit 36 verbunden ist. Aufgrund seiner Eigensicherheit kann das zweite Modul 14 auch im Betriebsfall in dem explosionsgefährdeten Bereich geöffnet werden. Zusätzlich weist das zweite Modul 14 in dem gezeigten Ausführungsbeispiel einen eigensicheren Grenzsignalgeber 32 auf, der ebenfalls über die zweite Anschlußeinheit 30 und die Aderleitungsdurchführung 22 angeschlossen ist.

Insbesondere in dem Fall, in dem Stellungsregler als Feldgeräte eingesetzt werden, ist die Verwendung von einen oder zwei innerhalb des gleichen Gehäuses angeordneten Grenzsignalgeber(n) häufig. Die Anzahl der Adern des Verbindungskabels 24 und der Aderleitungsdurchführung 22 liegt typischerweise zwischen drei und sieben, wobei ein eigensicheres Zweileitergerät als zweites Modul minimal drei Adern benötigt, um zusätzlich zu den zwei Zweileiterkabeln eine Erdung für das Gehäuse sicherzustellen, und der typische Fall eines Stellungsreglers mit Grenzsignalgebern dagegen sieben Adern, daß heißt zusätzlich jeweils zwei pro Grenzsignalgeber, erfordert.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 10: Feldgerät
- 12: Erstes Modul
- 14: Zweites Modul
- 16: Anschlußraum
- 18: Erste Anschlußeinheit
- 20: Sicherheitsbarriere
- 22: Aderleitungsdurchführung
- 24: Verbindungskabel
- 26: Verdrehsicherung
- 28: Außengewinde
- 30: Zweite Anschlußeinheit
- 32: Grenzsignalgeber
- 34: Leitwarte
- 36: Elektronik und Bedieneinheit

## Patentansprüche

1. Elektrisches Feldgerät (10) der Zündschutzart der druckfesten Kapselung zum Einsatz in explosionsgefährdeten Bereichen, **dadurch gekennzeichnet, daß**
das Feldgerät (10) aus mindestens zwei mechanisch sowie elektrisch gekoppelten Modulen (12, 14) besteht, wobei
ein erstes Modul (12) einen Anschlußraum (16) zum Anschluß des Feldgerätes (10) in einem explosionsgefährdeten Bereich mit darin angeordneter Sicherheitsbarriere (20) und ein Gehäuse der Zündschutzart der druckfesten Kapselung aufweist,
das zweite Modul (14) ein Feldgerät der eigensicheren Zündschutzart aufweist,
die elektrische Verbindung zwischen den beiden Modulen (12, 14) eine zünddurchschlagsichere Aderleitungsdurchführung (22) umfaßt, und
die elektrischen Signalverbindungen des zweiten Moduls (14) über die Aderleitungsdurchführung (22) realisiert sind.

2. Feldgerät nach Anspruch 1, **dadurch gekennzeichnet, daß**
die mechanische Verbindung beider Module (12, 14) aus einer Schraubverbindung besteht, die vorzugsweise eine Verdrehsicherung (26) umfaßt.

3. Feldgerät nach Anspruch 2, **dadurch gekennzeichnet, daß**
die Aderleitungsdurchführung (22) und die Schraubverbindung in einem ausgebildet sind.

4. Feldgerät nach Anspruch 2 oder 3, **dadurch gekennzeichnet, daß**
die Schraubverbindung als ein Rohr mit einem Außengewinde (28) realisiert ist, und
durch das Rohr Aderleitungen geführt sind.

5. Feldgerät nach einem der vorangehenden Ansprüche, **dadurch gekennzeichnet, daß**
die Aderleitungsdurchführung (22) mindestens drei Adern, vorzugsweise drei bis sieben Adern, aufweist.

6. Feldgerät nach einem der vorangehenden Ansprüche, **gekennzeichnet durch**
ein Verbindungskabel (24) zum Verbinden des Feldgerätes (10) mit einer Leitwarte (34) in einem sicheren Bereich, und eine erste Anschlußeinheit (18) im ersten Modul (12) zum Anschließen des Verbindungskabels (24).

7. Feldgerät nach Anspruch 6, **dadurch gekennzeichnet, daß**
die erste Anschlußeinheit (18) und die Sicherheitsbarriere (20) innerhalb des ersten Moduls (12) vergossen sind.

8. Feldgerät nach einem der vorangehenden Ansprüche, **dadurch gekennzeichnet, daß**
in dem zweiten Modul (14) eine zweite Anschlußeinheit (30) angeordnet ist, und
die zweite Anschlußeinheit (30) mit einer Elektronik und Bedieneinheit (36) verbunden ist.

9. Feldgerät nach einem der vorangehenden Ansprüche, **dadurch gekennzeichnet, daß**
das zweite Modul (14) einen Stellungsregler darstellt.

10. Feldgerät nach einem der vorangehenden Ansprüche, **dadurch gekennzeichnet, daß**
das zweite Modul (14) mindestens einen Grenzsignalgeber (32) der eigensicheren Zündschutzart enthält, und
jeder Grenzsignalgeber (32) über zwei Adern der Aderleitungsdurchführung (22) angeschlossen ist.

11. Feldgerät nach einem der vorangehenden Ansprüche, **dadurch gekennzeichnet, daß**
das Feldgerät (10) zur bidirektionalen Kommunikation über die elektrischen Anschlüsse im Anschlußraum (16) des ersten Moduls (12) ausgelegt ist.

12. Feldgerät nach einem der vorangehenden Ansprüche, **dadurch gekennzeichnet, daß**
die Kommunikation mit dem Feldgerät (10) durch ein einem analogen Signal überlagerbares, mittelwertfreies, digitales Signal erfolt, insbesondere gemäß dem HART-Feld-Kommunikationsprotokoll.

13. Feldgerät nach einem der vorangehenden Ansprüche, **dadurch gekennzeichnet, daß**
das Feldgerät (10) als digitales Prozeßgerät ausgelegt ist, und die Kommunikation über einen digitalen Feldbus erfolgt.

## Claims

1. An electric field device (10) of the pressure-tight casing flameproofing type for use in explosion-endangered areas, **characterised in that** the field device (10) consists of at least two mechanically and electrically coupled modules (12, 14), a first module (12) comprising a connection chamber (16) for connecting the field device (10) in an explosion-endangered area to a safety barrier (20) disposed therein and a casing of the pressure-tight casing flameproofing type, the second module (14) comprises a field device of the intrinsically safe flameproofing type, the electrical connection between the two modules (12, 14) comprises a cored conductor bushing (22) which is proof against ignition penetration and the electric signal connections of the second module (14) are embodied via the cored conductor bushing (22).

2. A field device accoreding to claim 1, **characterised in that** the mechanical connection between the two modules (12, 14) consists of a screw connection which preferably comprises an anti-rotation means (26).

3. A field device accoreding to claim 2, **characterised in that** the cored conductor bushing (22) and the screw connection are made in one piece.

4. A field device accoreding to claim 2 or 3, **characterised in that** the screw connection is embodied as a tube having an external screwthread (28) and cored conductors are passed through the tube.

5. A field device accoreding to any one of the preceding claims, **characterised in that** the cored conductor bushing (22) comprises at least three cores, preferably three to seven cores.

6. A field device accoreding to any one of the preceding claims, **characterised by** a connecting cable (24) for connecting the field device (10) to an observation post (34) in a safe area, and a first connection unit (18) in the first module (12) for connection of the connecting cable (24).

7. A field device accoreding to claim 6, **characterised in that** the first connection unit (18) and the safety barrier (20) are potted inside the first module (12).

8. A field device accoreding to any one of the preceding claims, **characterised in that** a second connection unit (30) is disposed in the second module (14) and the second connection unit (30) is connected to an electronic unit and operating unit (36).

9. A field device accoreding to any one of the preceding claims, **characterised in that** the second module (14) constitutes a position controller.

10. A field device accoreding to any one of the preceding claims, **characterised in that** the second module (14) contains at least one limit signal transmitter (32) of the intrinsically safe flameproofing type and each limit signal transmitter (32) is connected via two cores of the cored conductor bushing (22).

11. A field device accoreding to any one of the preceding claims, **characterised in that** the field device (10) is designed for bi-directional communication via the electrical connections in the connection chamber (16) of the first module (12).

12. A field device accoreding to any one of the preceding claims, **characterised in that** the communication with the field device (10) is effected by an average-free digital signal which is adapted to be superimposed on an analog signal, more particularly in accoredance with the HART field communication protocol.

13. A field device accoreding to any one of the preceding claims, **characterised in that** the field device (10) is designed as a digital process device and the communication is effected via a digital field bus.

## Revendications

1. Appareil électrique (10) de terrain du type protégé contre les explosions avec un blindage résistant à la pression, pour une utilisation dans des emplacements où il y a un risque d'explosion, **caractérisé en ce que**
l'appareil (10) de terrain est constitué au moins de deux modules (12, 14) couplés aussi bien mécaniquement qu'électriquement, le premier module (12) comprenant un compartiment de connexion (16) qui permet de connecter l'appareil (10) de terrain dans un emplacement où il y a un risque d'explosion et qui comporte une barrière de sécurité (20) incorporée, ainsi qu'un logement du type protégé contre les explosions avec un blindage résistant à la pression et le second module (14) comprenant un appareil de terrain du type intrinsèquement protégé contre les explosions,
**en ce que** la connexion électrique entre les deux modules (12, 14) comprend un conduit (22) pour des câbles à conducteurs sécurisé contre des ruptures par explosion et
**en ce que** les connexions pour les signaux électriques du second module (14) sont assurées par le conduit (22) pour des câbles à conducteurs.

2. Appareil de terrain selon la revendication 1, **caractérisé en ce que** la connexion mécanique des deux modules (12, 14) est constituée par une connexion filetée qui comporte, de préférence, une sécurité anti-rotation (26).

3. Appareil de terrain selon la revendication 2, **caractérisé en ce que**
le conduit (22) pour des câbles à conducteurs et la connexion filetée sont la même pièce.

4. Appareil de terrain selon la revendication 2 ou la revendication 3, **caractérisé en ce que**
la connexion filetée est réalisée sous la forme d'un tube avec un filetage exteme (28) et **en ce que**
des câbles à conducteurs sont acheminés par le tube.

5. Appareil de terrain selon l'une des revendications précédentes, **caractérisé en ce que**
le conduit (22) pour des câbles à conducteurs comporte au moins trois conducteurs et, de préférence, de trois à sept conducteurs.

6. Appareil de terrain selon l'une des revendications précédentes, **caractérisé par**
un câble de connexion (24) pour connecter l'appareil (10) de terrain avec un poste de commande (34) des circuits dans un emplacement protégé et une première unité
de connexion (18) dans le premier module (12), pour la connexion du câble de connexion (24).

7. Appareil de terrain selon la revendication 6, **caractérisé en ce que** la première unité de connexion (18) et la barrière de sécurité (20) se trouvent à l'intérieur du premier module (12).

8. Appareil de terrain selon l'une des revendications précédentes, **caractérisé en ce que**
dans le second module (14), il y a une seconde unité de connexion (30) et **en ce que** la seconde unité de connexion (30) est connectée avec une unité électronique et de commande (36).

9. Appareil de terrain selon l'une des revendications précédentes, **caractérisé en ce que**
le second module (14) constitue un dispositif de réglage de la position.

10. Appareil de terrain selon l'une des revendications précédentes, **caractérisé en ce que**
le second module (14) comprend au moins un émetteur (32) d'un signal de seuil du type intrinsèquement protégé contre les explosions et **en ce que**
chaque émetteur (32) de signal de seuil est raccordé par deux conducteurs du conduit (22) pour des câbles à conducteurs.

11. Appareil de terrain selon l'une des revendications précédentes, **caractérisé en ce que**
l'appareil (10) de terrain est agencé pour permettre une communication bidirectionnelle par les connexions électriques dans le compartiment de connexion (16) du premier module (12).

12. Appareil de terrain selon l'une des revendications précédentes, **caractérisé en ce que**
la communication avec l'appareil (10) de terrain se fait par un signal numérique sans valeurs intermédiaires et pouvant se superposer sur un signal analogique et, en particulier, selon le protocole de communication de terrain « HART ».

13. Appareil de terrain selon l'une des revendications précédentes, **caractérisé en ce que**
l'appareil (10) de terrain est conçu comme un processeur numérique et **en ce que** la communication est assurée par un bus de terrain numérique.
